# FASCICULE DE BREVET EUROPEEN

(11) **EP 2 826 675 B1**
(45) Date de publication et mention de la délivrance du brevet: **30.01.2019**
(21) Numéro de dépôt: 14175303.8
(22) Date de dépôt: 01.07.2014
(51) Int. Cl.: B60R 19/52

(54) **Ensemble avant de véhicule automobile et véhicule automobile correspondant**
Frontteil eines Kraftfahrzeugs, und Kraftfahrzeug mit einem solchen Frontteil
Front assembly of a motor vehicle and corresponding motor vehicle

(30) Priorité: 03.07.2013 FR 1356502
(43) Date de publication de la demande: 21.01.2015
(73) Titulaire: Flex-N-Gate France, 25405 Audincourt (FR)
(72) Inventeur: Verbrugghe, Jérôme, 90300 Eloie (FR)
(74) Mandataire: Lavoix

(56) Documents cités:
- WO-A1-02/12028
- DE-A1- 4 435 396
- DE-A1- 10 258 626
- DE-B3- 10 337 751
- US-A1- 2006 119 115

## Description

La présente invention concerne un ensemble avant de véhicule automobile, comprenant un élément de carrosserie, une grille d'entrée d'air fixée audit élément de carrosserie et un système de renfort de la grille d'entrée d'air, le système de renfort comprenant une pièce de support fixée à l'élément de carrosserie.

L'invention concerne également un véhicule automobile comprenant un tel ensemble avant.

On connaît déjà dans l'état de la technique un ensemble avant de ce type.

Les documents DE 102 58 626 A1 et DE 44 35 396 A1 décrivent un ensemble avant du type précité.

Toutefois, la grille d'entrée d'air de ce type d'ensemble avant ne présente pas une rigidité suffisante du fait de sa structure lamellaire et de sa large ouverture. En effet, de manière générale, les constructeurs automobiles imposent que les grilles d'entrée d'air des véhicules automobiles puissent supporter des efforts d'une certaine valeur suivant une direction longitudinale, afin de ne pas s'enfoncer dans le véhicule en cas de choc limité ou en cas d'appui contre cette grille. A titre d'exemple, l'effort peut être de l'ordre de 50 N pour une déformation de la grille d'entrée d'air de l'ordre de 12 mm.

Dans ce contexte, l'invention vise à proposer un ensemble avant de véhicule automobile dans lequel la grille d'entrée d'air présente une rigidité améliorée vérifiant notamment le critère ci-dessus.

A cet effet, l'invention a pour objet un ensemble avant de véhicule selon la revendication 1.

L'ensemble avant selon l'invention peut comprendre l'une ou plusieurs des caractéristiques suivantes, prises isolément ou suivant toute combinaison techniquement possible :
- la pièce de support comprend une surface d'appui rigide s'étendant transversalement à la direction longitudinale, en regard de l'organe de rappel ;
- l'organe de rappel est déformable entre une configuration de repos et une configuration comprimée, la grille d'entrée d'air est déplaçable entre une position de repos et une position comprimée, l'organe de rappel étant déformé dans une configuration intermédiaire entre la configuration de repos et la configuration comprimée lorsque la grille d'entrée d'air est dans la position de repos ;
- l'organe de rappel est un ressort à lame ;
- l'organe de rappel est venu de matière avec la pièce de support ; et
- l'organe de rappel est réalisé en un matériau plastique.

L'invention a également pour objet un véhicule automobile comprenant un ensemble avant tel que décrit plus haut.

L'invention sera mieux comprise à la lecture de la description qui va suivre, donnée uniquement à titre d'exemple et faite en se référant aux dessins annexés sur lesquels :
- la figure 1 est une représentation schématique en coupe dans un plan vertical longitudinal d'un ensemble avant de véhicule automobile selon l'invention ; et
- la figure 2 est une représentation schématique d'une grille d'entrée d'air d'un ensemble avant de véhicule automobile selon l'invention.

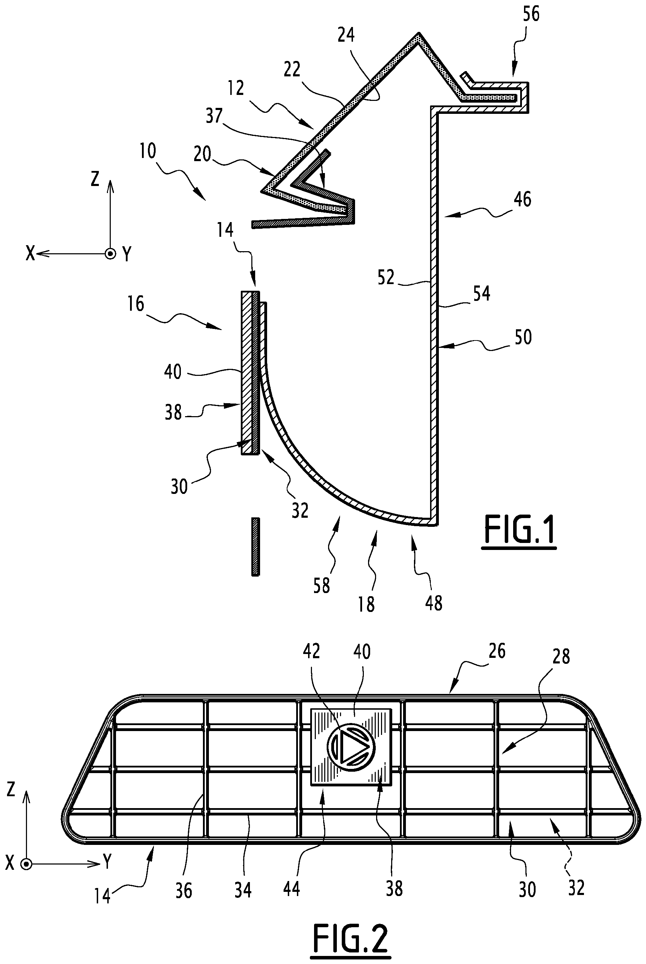

Sur la figure 1, on a représenté un ensemble avant 10 de véhicule automobile, destiné à être fixé à l'avant du véhicule, devant une face avant (non représentée) destinée à supporter des équipements tels qu'un radiateur, un échangeur de chaleur et/ou un groupe moto-ventilateur (GMV) disposés sous le capot du véhicule. L'ensemble avant forme la surface externe de l'avant du véhicule et est donc visible depuis l'extérieur du véhicule.

Dans la suite de la description, les termes « longitudinal », « transversal », « avant », « arrière » s'entendent par référence au repère orthogonal usuel des véhicules automobiles, comprenant :
- un axe longitudinal X, horizontal et orienté de l'arrière vers l'avant,
- un axe transversal Y, horizontal et orienté de la droite vers la gauche, et
- un axe vertical Z, orienté du bas vers le haut.

L'ensemble avant 10 comprend un élément de carrosserie 12, tel qu'une peau de pare-chocs 12, s'étendant transversalement et longitudinalement, et une grille d'entrée d'air 14 destinée à être disposée en travers d'une ouverture principale 16 de la peau de pare-chocs 12, prévue pour permettre l'entrée d'air à l'intérieur de la face avant du véhicule, notamment pour assurer le refroidissement des équipements de celle-ci.

L'ensemble comprend en outre un système de renfort 18 de la grille d'entrée d'air 14 s'étendant transversalement à la direction longitudinale du véhicule et disposé à l'arrière de la grille d'entrée d'air 14.

La peau de pare-chocs 12 comprend une partie principale 20 sensiblement plane et transversale, dans laquelle est ménagée l'ouverture principale 16 d'entrée d'air. La peau de pare-chocs 12 présente une surface extérieure 22 orientée vers l'extérieur du véhicule et une surface intérieure 24 orientée vers l'intérieur du véhicule.

La grille d'entrée d'air 14 est fixée dans l'ouverture principale 16, et a pour fonction principale de canaliser le flux d'air traversant l'ouverture principale 16.

Comme visible sur la figure 2, la grille d'entrée d'air 14 comprend un cadre périphérique 26 et un réseau d'ailettes 28 solidaires du cadre périphérique 26.

Le cadre périphérique 26 et le réseau d'ailettes 28 définissent une face extérieure 30 de la grille d'entrée d'air 14, orientée vers l'avant du véhicule, et une face intérieure 32 de la grille d'entrée d'air 14, orientée vers l'arrière du véhicule.

Le cadre périphérique 26 est fixé à la peau de pare-chocs 12, par exemple par l'intermédiaire d'une patte de fixation 37, comme visible sur la figure 1.

Le réseau d'ailettes 28 s'étend à l'intérieur du cadre périphérique 26. Le réseau d'ailettes 28 comporte par exemple une série d'ailettes sensiblement horizontales 34 et une série d'ailettes sensiblement verticales 36, entrecroisées, définissant entre elles des alvéoles de passage de l'air. Dans le cas d'ailettes horizontales et verticales, les alvéoles ont une forme sensiblement rectangulaire. Toutefois, d'autres formes sont envisageables en modifiant l'agencement des ailettes ou en prévoyant d'autres formes d'éléments d'obturation de la grille délimitant les alvéoles. Ainsi, les alvéoles pourraient être triangulaires, rondes, etc.

Le cadre périphérique 26 et le réseau d'ailettes 28 sont venus de matière. Ils sont par exemple moulés par injection de matière plastique.

La grille d'entrée d'air 14 est déplaçable entre une position de repos et une position comprimée, sous l'effet d'une force de compression longitudinale exercée sur la face extérieure 30 de la grille d'entrée d'air 14 de l'avant vers l'arrière du véhicule. Ce déplacement se fait sur une course limitée, par exemple environ 12 mm.

La grille d'entrée d'air 14 comprend avantageusement un élément décoratif 38 disposé sur la face extérieure 30.

L'élément décoratif 38 est par exemple formé par une plaquette 40 fixée sur la grille d'entrée d'air 14, par exemple, par encliquetage sur les ailettes de la grille d'entrée d'air 14. En variante, la plaquette 40 est fixée à la grille d'entrée d'air 14 par vissage, soudage, collage ou autre. Sur la plaquette 40 est disposé un logo 42 représentant par exemple la marque du véhicule automobile.

L'élément décoratif 38 est disposé sur la face extérieure 30 de la grille d'entrée d'air 14, à distance du cadre périphérique 26, dans une région médiane 44 de la grille d'entrée d'air 14.

L'élément décoratif 38 est une pièce rapportée sur la grille d'entrée d'air 14 qui ne s'étend pas sur toute la face extérieure 30 de la grille d'entrée d'air 14.

L'élément décoratif 38 est donc disposé sur une partie limitée de la face extérieure 30 de la grille d'entrée d'air 14, par exemple sensiblement au centre selon la direction transversale. Par exemple, l'élément décoratif 38 est disposé sur une surface de la face extérieure 30 sensiblement égale à la surface d'une alvéole.

Selon des variations de réalisation, l'élément décoratif 38 occupe sensiblement une alvéole, comme représenté sur la figure 2, ou est disposé sur un ou des croisement(s) entre une ou des ailette(s) sensiblement horizontale(s) 34 et une ou des ailette(s) sensiblement verticale(s) 36

Le système de renfort 18 est disposé à l'arrière de la grille d'entrée d'air 14. Le système de renfort 18 est destiné à renforcer la rigidité de la grille d'entrée d'air 14.

Le système de renfort 18 comprend une pièce de support 46 et un organe de rappel 48 disposés successivement de l'arrière vers l'avant le long de la direction longitudinale du véhicule.

La pièce de support 46 s'étend sensiblement transversalement à l'arrière de la grille d'entrée d'air 14, et est fixée à la peau de pare-chocs 12.

La pièce de support 46 comprend par exemple une plaque transversale 50 rigide définissant une surface d'appui avant 52 et une surface d'appui arrière 54, et une patte transversale 56 destinée à fixer la plaque transversale 50 à la peau de pare-chocs 12. La pièce de support 46 est rigidement fixée à la face avant (non représentée) du véhicule.

La surface d'appui avant 52 s'étend transversalement à la direction longitudinale en regard de la grille d'entrée d'air 14.

La patte transversale 56 de la peau de pare-chocs 12 s'étend sur toute la longueur transversale de la pièce de support 46, et est située au-dessus des surfaces d'appui avant et arrière 52, 54 et forme un organe d'encliquetage fixé par clipsage sur la peau du pare-chocs.

Alternativement, la pièce de support peut être fixée par soudage, collage, vissage ou autre à la peau du pare-chocs.

La pièce de support 46 est avantageusement réalisée en un matériau plastique, tel que du polypropylène ou de l'acrylonitrile butadiène styrène (ABS). En variante, la pièce de support 46 est réalisée en un matériau métallique.

Suivant la figure 1, l'organe de rappel 48 est un ressort à lame 58 disposé entre la grille d'entrée d'air 14 et la pièce de support 46.

En variante (non représentée), l'organe de rappel 48 est par exemple formé par une portion arrondie faisant saillie depuis la surface d'appui avant 52 de la pièce de support 46 vers la face intérieure 32 de la grille d'entrée d'air 14.

Suivant la figure 1, l'organe de rappel 48 est venu de matière avec la pièce de support 46. En variante (non représentée), l'organe de rappel 48 est rapporté sur la pièce de support 46.

L'organe de rappel 48 est par exemple réalisé en un matériau plastique tel que du polypropylène ou de l'acrylonitrile butadiène styrène (ABS).

En variante, l'organe de rappel 48 est réalisé en un matériau métallique.

De manière avantageuse, l'organe de rappel 48 est disposé en regard de la région médiane 44 de la grille d'entrée d'air 14 sur laquelle est par exemple fixé l'élément décoratif 38, de sorte que l'élément décoratif masque l'organe de rappel et le rend invisible depuis l'extérieur du véhicule. Ainsi, l'ensemble avant 10 conserve une esthétique satisfaisante.

En outre, l'organe de rappel 48 est déformable entre une configuration de repos et une configuration comprimée. Il est propre à se comprimer lorsqu'une force de compression longitudinale est exercée de l'avant vers l'arrière sur la grille d'entrée d'air 14, et est dimensionné de façon à pouvoir résister à cette force de compression longitudinale.

De manière avantageuse, lorsque l'organe de rappel 48 est disposé entre la grille d'entrée d'air 14 et la surface d'appui avant 52 de la pièce de support 46 et que la grille d'entrée d'air 14 est dans la configuration de repos, c'est-à-dire lorsque qu'aucune force de compression longitudinale n'est exercée sur la grille d'entrée d'air 14, l'organe de rappel 48 est déformé dans une configuration intermédiaire entre la configuration de repos et la configuration comprimée. De cette façon, les bruits parasites liés aux vibrations du véhicule lors de son déplacement sont évités, car les vibrations sont absorbées par l'organe de rappel.

En situation normale, la pièce de support 46 est fixée à la peau de pare-chocs 12 par l'intermédiaire de la patte transversale 56, et la grille d'entrée d'air 14 est disposée dans l'ouverture principale 16 de la peau de pare-chocs 12 et encliquetée sur la peau de pare-chocs 12.

L'organe de rappel 48 est disposé entre la face intérieure 32 de la grille d'entrée d'air 14 et la surface d'appui avant 52 de la plaque transversale 50, en regard de l'élément décoratif 38 situé sur la région médiane 44 de la grille d'entrée d'air 14. De cette façon, l'organe de rappel 48 est masqué par l'élément décoratif 38 et n'est pas visible depuis l'extérieur du véhicule.

L'organe de rappel 48 est alors dans sa configuration intermédiaire, c'est-à-dire légèrement comprimée. De cette façon, les bruits parasites générés par les vibrations liées au déplacement du véhicule sont évités.

La pièce de support 46 est rigidement fixée à la face avant du véhicule. Ainsi, lorsqu'une force de compression longitudinale est exercée sur la face extérieure 30 de la grille d'entrée d'air 14, l'organe de rappel 48 se comprime entre la grille d'entrée d'air 14 et la surface d'appui avant 52 de la pièce de support 46. La déformation de la grille d'entrée d'air 14 est ainsi diminuée.

On comprend ainsi que l'ensemble avant 10 selon l'invention présente une grille d'entrée d'air 14 de rigidité améliorée, pouvant supporter une force de compression d'une certaine valeur suivant une direction longitudinale. Par exemple, la valeur de la force de compression longitudinale peut être de l'ordre de 50 N pour une déformation de la grille d'entrée d'air 14 de l'ordre de 12 mm.

Il convient de noter que l'élément de carrosserie 12 n'est pas nécessairement formé par une peau de pare-chocs et que la pièce de support 46 pourrait être fixée à un autre élément de carrosserie, telle que le capot ou une aile ou autre.

## Revendications

1. Ensemble avant (10) de véhicule automobile, comprenant un élément de carrosserie (12), une grille d'entrée d'air (14) fixée audit élément de carrosserie (12) et un système de renfort (18) de la grille d'entrée d'air (14), le système de renfort (18) comprenant une pièce de support (46) fixée à l'élément de carrosserie (12), la grille d'entrée d'air (14) comprenant :
- une région médiane (44) ;
- une face extérieure (30) orientée vers l'extérieur du véhicule ;
- une face intérieure (32) orientée vers l'intérieur du véhicule ; et
- un élément décoratif (38) disposé sur la face extérieure (30),
**caractérisé en ce que** le système de renfort (18) comprend en outre un organe de rappel (48) disposé en regard de la région médiane (44) entre la grille d'entrée d'air (14) et la pièce de support (46), l'élément décoratif (38) étant disposé en regard de l'organe de rappel (48), de sorte que l'élément décoratif (38) masque l'organe de rappel (48) et le rend invisible depuis l'extérieur du véhicule, l'organe de rappel (48) étant propre à se comprimer sous l'effet d'une force de compression longitudinale exercée sur la grille d'entrée d'air (14), et **en ce que** la grille d'entrée d'air (14) comprend des éléments d'obturation de la grille délimitant des alvéoles, l'élément décoratif (38) étant disposé sur une partie limitée de la face extérieure (30) de la grille d'entrée d'air (14) et sur une surface de la face extérieure (30) sensiblement égale à la surface d'une alvéole.

2. Ensemble avant (10) selon la revendication 1, **caractérisé en ce que** la pièce de support (46) comprend une surface d'appui rigide (52) s'étendant transversalement à la direction longitudinale, en regard de l'organe de rappel (48).

3. Ensemble avant (10) selon la revendication 1 ou 2, **caractérisé en ce que** l'organe de rappel (48) est déformable entre une configuration de repos et une configuration comprimée, et **en ce que** la grille d'entrée d'air (14) est déplaçable entre une position de repos et une position comprimée, l'organe de rappel (48) étant déformé dans une configuration intermédiaire entre la configuration de repos et la configuration comprimée lorsque la grille d'entrée d'air (14) est dans la position de repos.

4. Ensemble avant (10) selon l'une quelconque des revendications précédentes, **caractérisé en ce que** l'organe de rappel (48) est un ressort à lame (58).

5. Ensemble avant (10) selon l'une quelconque des revendications précédentes, **caractérisé en ce que** l'organe de rappel (48) est venu de matière avec la pièce de support (46).

6. Ensemble avant (10) selon l'une quelconque des revendications 1 à 4, **caractérisé en ce que** l'organe de rappel (48) est rapporté sur la pièce de support (46).

7. Ensemble avant (10) selon l'une quelconque des revendications précédentes, **caractérisé en ce que** l'organe de rappel (48) est réalisé en un matériau plastique.

8. Véhicule automobile **caractérisé en ce qu'**il comprend un ensemble avant (10) selon l'une quelconque des revendications précédentes.

## Patentansprüche

1. Fronteinrichtung (10) für eine Kraftfahrzeug, aufweisend ein Karosserieelement (12), einen Lufteintrittsgrill (14), der an dem besagten Karosserieelement (12) befestigt ist, und ein System zur Verstärkung (18) des Lufteintrittsgrills (14), wobei das System zur Verstärkung (18) aufweist ein Halteteil (46), das an dem Karosserieelement (12) befestigt ist, wobei der Lufteintrittsgrill (14) aufweist:
- einen mittleren Bereich (44),
- eine Außenseite (30), die zu dem Äußeren des Fahrzeugs hin gewandt ist,
- eine Innenseite (32), die zu dem Inneren des Fahrzeugs hin gewandt ist, und
- ein dekoratives Element (38), das an der Außenseite (30) angeordnet ist,
**dadurch gekennzeichnet, dass** das System zur Verstärkung (18) ferner aufweist ein Rückstellorgan (48), das dem mittleren Bereich gegenüberstehend zwischen dem Lufteintrittsgrill (14) und dem Halteteil (46) angeordnet ist, wobei das dekorative Element (38) dem Rückstellorgan (48) gegenüberstehend angeordnet ist, sodass das dekorative Element (38) das Rückstellorgan (48) abdeckt und es vom Äußeren des Fahrzeugs her nicht-sichtbar macht, wobei das Rückstellorgan (48) imstande ist, zusammengedrückt zu werden unter der Wirkung einer longitudinalen Zusammendrückkraft, die auf den Lufteintrittsgrill (14) ausgeübt wird, und dass der Lufteintrittsgrill (14) Elemente zur Verschließung des Grills aufweist, Zellen begrenzend, wobei das dekorative Element (38) an einem Abschnitt angeordnet ist, der von der Außenseite (30) des Lufteintrittsgrills (14) begrenzt ist, und auf einer Fläche der Außenseite (30), die im Wesentlichen gleich ist zu der Fläche einer Zelle.

2. Fronteinrichtung (10) gemäß Anspruch 1, **dadurch gekennzeichnet, dass** das Halteteil (46) eine starre Abstützfläche (52) aufweist, die sich gegenüberstehend zu dem Rückstellorgan (48) quer zu der longitudinalen Richtung erstreckt.

3. Fronteinrichtung (10) gemäß Anspruch 1 oder 2, **dadurch gekennzeichnet, dass** das Rückstellorgan (48) verformbar ist zwischen einer Ruhekonfiguration und einer Zusammengedrückt-Konfiguration, und dass der Lufteintrittsgrill (14) verlagerbar ist zwischen einer Ruheposition und einer Zusammengedrückt-Position, wobei das Rückstellorgan (48) verformbar ist in eine Zwischenkonfiguration zwischen der Ruhekonfiguration und der Zusammengedrückt-Konfiguration, wenn der Lufteintrittsgrill (14) in der Ruheposition ist.

4. Fronteinrichtung (10) gemäß irgendeinem der vorhergehenden Ansprüche, **dadurch gekennzeichnet, dass** das Rückstellorgan (48) eine Blattfeder (58) ist.

5. Fronteinrichtung (10) gemäß irgendeinem der vorhergehenden Ansprüche, **dadurch gekennzeichnet, dass** das Rückstellorgan (48) mit dem Halteteil (46) stofflich einstückig ist.

6. Fronteinrichtung (10) gemäß irgendeinem der Ansprüche 1 bis 4, **dadurch gekennzeichnet, dass** das Rückstellorgan (48) an dem Halteteil (46) angestückt ist.

7. Fronteinrichtung (10) gemäß irgendeinem der vorhergehenden Ansprüche, **dadurch gekennzeichnet, dass** das Rückstellorgan (48) aus einem Kunststoffmaterial realisiert ist.

8. Kraftfahrzeug, **dadurch gekennzeichnet, dass** es eine Fronteinrichtung (10) gemäß irgendeinem der vorhergehenden Ansprüche aufweist.

## Claims

1. Front assembly (10) of a motor vehicle, comprising a bodywork element (12), an air intake grille (14) fixed to said bodywork element (12), and a reinforcing system (18) for the air intake grille (14), the reinforcing system (18) comprising a support member (46) fixed to the bodywork element (12), the air intake grille (14) comprising:
- a middle region (44);
- an outer face (30) oriented towards the outside of the vehicle;
- an inner face (32) oriented towards the inside of the vehicle; and
- a decorative element (38) arranged on the outer face (30),
**characterised in that** the reinforcing system (18) further comprises a return member (48) arranged opposite the middle region (44) between the air intake grille (14) and the support member (46), the decorative element (38) being arranged opposite the return member (48) so that the decorative element (38) conceals the return member (48) and renders it invisible from outside the vehicle, the return member (48) being capable of being compressed under the effect of a longitudinal compression force exerted on the air intake grille (14), and **in that** the air intake grille (14) comprises closing elements for the grille that delimit cells, the decorative element (38) being arranged over a limited portion of the outer face (30) of the air intake grille (14) and over a surface of the outer face (30) that is substantially equal to the surface of a cell.

2. Front assembly (10) according to claim 1, **characterised in that** the support member (46) comprises a rigid bearing surface (52) extending transversely to the longitudinal direction, opposite the return member (48).

3. Front assembly (10) according to claim 1 or 2, **characterised in that** the return member (48) is deformable between a rest configuration and a compressed configuration, and **in that** the air intake grille (14) is displaceable between a rest position and a compressed position, the return member (48) being deformed into an intermediate configuration between the rest configuration and the compressed configuration when the air intake grille (14) is in the rest position.

4. Front assembly (10) according to any one of the preceding claims, **characterised in that** the return member (48) is a leaf spring (58).

5. Front assembly (10) according to any one of the preceding claims, **characterised in that** the return member (48) is integral with the support member (46).

6. Front assembly (10) according to any one of claims 1 to 4, **characterised in that** the return member (48) is attached to the support member (46).

7. Front assembly (10) according to any one of the preceding claims, **characterised in that** the return member (48) is made of a plastics material.

8. Motor vehicle, **characterised in that** it comprises a front assembly (10) according to any one of the preceding claims.
